# EUROPÄISCHE PATENTANMELDUNG

(11) **EP 4 579 080 A1**
(43) Veröffentlichungstag der Anmeldung: **02.07.2025**
(21) Anmeldenummer: 24218543.7
(22) Anmeldetag: 10.12.2024
(51) Int. Cl.: F04B 39/12, F16J 10/02

(54) **LUFTKOMPRESSOR MIT BESCHICHTETEM ZYLINDER**

(30) Priorität: 29.12.2023 DE 102023136845
(71) Anmelder: KNORR-BREMSE Systeme für Schienenfahrzeuge GmbH, 80809 München (DE)
(72) Erfinder: KENI, Harshada, 80809 München (DE); WINKLER, Michael, 80809 München (DE); DONGARE, Nayana, 80809 München (DE); ALAWEKAR, Rajdeep, 80809 München (DE); OBERMAIER, Ludwig, 80809 München (DE)

(57) **Zusammenfassung**

Ein erfindungsgemäßer Kompressor weist auf: einen zumindest teilweise hohlen Zylinder (1), der aufweist:
einen metallischen Körper (2) mit einer inneren Oberfläche (3) sowie einer äußeren Oberfläche (4),
(5) aufgebracht ist, welche Polytetrafluorethylen (PTFE) enthält.

Dadurch, dass die Beschichtung (5) in zumindest die innere Oberfläche (3) integriert ist, wird die Lebensdauer eines Zylinders (1) und Kolbens (6) deutlich erhöht - beispielsweise bei Luftkompressoren.

## Beschreibung

In der vorliegenden Erfindung geht es um die Beschichtung von Zylindern für Luftkompressoren, sowie um ein System aus Zylinder, Kolben und Kolbenring in einem Kompressor, sowie um ein Verfahren zur Herstellung eines entsprechenden Zylinders.

In Luftkompressoren kommen Kolben zum Einsatz, welche sich jeweils in einem Zylinder auf und ab bewegen können. In Kolbenkompressoren arbeiten die Kolben gegen den Druck und müssen über eine Gleitdichtung verfügen, damit der Kolben das Gas komprimieren kann, ohne dass Leckagen am Kolben auftreten. Kolbenringe sorgen für diese Abdichtung, um eine maximale Zylinderkapazität und Effizienz zu erreichen.

In einem solchen Kompressor bewegen sich Kolben in Zylindern vielzählige Male, und ohne zusätzliche Schmierung ist Verschleiß an allen sich bewegenden Teilen ein Problem.

Aus dem Stand der Technik ist das Dokument DE 10 2006 004 027 A1 bekannt. Dieses Dokument beschreibt einen Luftkompressor mit einem Kolben, der zum Hin- und Hergehen in einer Bohrung positioniert ist, wobei der Kolben eine erste Kolbenringanordnung, die aus einem harten Hochtemperaturpolymer hergestellt ist, und eine zweite Kolbenringanordnung aufweist, welche einen ersten Bereich, der mit der Bohrung in Eingriff kommt, wobei der erste Bereich aus einem verhältnismäßig weichen, selbstschmierenden Polymer hergestellt ist, und einen zweiten Bereich aufweist, welcher den ersten Bereich gegen die Bohrung vorspannt.

Ein Problem im Stand der Technik ist es daher, dass sehr häufig Verschleiß auftritt, insbesondere beim harten Zylinder und beim weicheren Kolbenring.

Es kann daher als eine Aufgabe der technischen Erfindung angesehen werden, einen Zylinder sowie ein System aus Zylinderkolben und Kolbenring bereitzustellen, bei welchem der entsprechende Verschleiß deutlich reduziert werden kann und bei welchem die Langlebigkeit der Systeme erhöht werden kann. Eine weitere Aufgabe ist die Bereitstellung eines Verfahrens zur Herstellung eines Zylinders, welcher in einem solchen System enthalten sein kann.

Diese Aufgabe wird durch einen Kompressor gemäß Anspruch 1 sowie ein Verfahren gemäß Anspruch 6 gelöst. Weitere vorteilhafte Ausgestaltungen der vorliegenden Erfindung sind Gegenstand der Unteransprüche.

Ein erfindungsgemäßer Kompressor weist mindestens einen Zylinder auf, welcher wiederum aufweist:
Einen zumindest teilweise hohlen metallischen Körper mit einer inneren Oberfläche sowie einer äußeren Oberfläche, und auf die innere Oberfläche sowie die äußere Oberfläche ist eine antikorrosive Beschichtung aufgebracht, welche Polytetrafluorethylen (PTFE) enthält.

Dadurch ist eine PTFE-Beschichtung der Innenseite des Zylinders integriert, es kann bei der Bewegung des Kolbens ein Teil der Beschichtung aus PTFE abgetragen werden, der abgetragene Teil der Beschichtung bildet dann allerdings einen Gleitfilm (abgetragenes PTFE lagert sich zwischen Erhebungen und Vertiefungen, welche durch die Rauheit des Metalls entstehen, an). Durch die Kombination der Rauheit der inneren Oberfläche und der darauf aufgebrachten Beschichtung, vorzugsweise vollständig bedeckenden Beschichtung, kann erreicht werden, dass stets gute Gleiteigenschaften vorhanden sind, die Lebensdauer des Zylinders und somit auch des Kolbens und Kolbenrings erhöht werden kann, und dass weniger Reibung stattfindet. In Kompressoren können dann die Wartungskosten reduziert werden. Polytetrafluorethylen (PTFE) selbst ist leicht klebrig und hat daher selbstreinigende Eigenschaften. Es ist ebenfalls hochtemperaturfest, da es einen sehr hohen Schmelzpunkt aufweist. Daher ist es auch gegenüber hohen Temperaturen im Zylinder (beispielsweise durch Reibungswärme) resistent.

Vorzugsweise enthält der metallische Körper Aluminium oder eine Aluminiumlegierung, diese Materialien sind leicht durch Werkzeugmaschinen bearbeitbar.

Weiter vorzugsweise enthält die Beschichtung einen PTFE-Kohlenstoff-Verbundwerkstoff, welcher weiter vorzugsweise kohlenstoffhaltige Partikel enthält. Solche Werkstoffe haben antistatische Eigenschaften, eine noch verbesserte Verschleißresistenz, und weiter eine verbesserte Druckfestigkeit.

Ein Kompressor weist vorzugsweise weiterhin auf: einen Kolben, der dazu angepasst ist, sich innerhalb des metallischen Zylinders zu bewegen, sowie einen Kolbenring, welcher radial am Kolben montiert ist. Eine solches Kombination weist eine erhöhte Lebensdauer auf, verglichen mit Systemen gemäß dem Stand der Technik.

Hierbei ist der Kolben vorzugsweise aus einem metallischen Werkstoff, vorzugsweise Aluminium, ausgebildet, auf welchem ebenfalls eine Beschichtung, welche Polytetrafluorethylen (PTFE) enthält, aufgebracht ist. Vorzugsweise weist auch der Kolbenring einen Werkstoff auf, welcher PTFE (Polytetrafluorethylen) enthält, bzw. ist aus diesem gefertigt. Dadurch, dass sowohl der Kolben, der Zylinder sowie der Kolbenring aus dem gleichen Material (oder zumindest aus der gleichen Beschichtung) aufgebaut sind, tritt keinen Verzug wegen Wärme auf, ein Abrieb aufgrund verschieden harter Materialien kann ebenfalls vermieden werden.

Vorzugsweise ist der Kompressor ein ölfreier Kompressor. Hier können die Gleiteigenschaften von PTFE besonders gut ausgenutzt werden, da hier die Kolben auch nicht ölgeschmiert sind.

Ein Verfahren zur Herstellung eines Zylinders gemäß der vorliegenden Erfindung weist die folgenden Schritte auf:
a) Herstellen des metallischen Körpers durch ein urformendes oder spanabhebendes Verfahren;
b) Anodisieren zumindest der inneren Oberfläche;
c) Bearbeiten zumindest der inneren Oberfläche;
d) Eintauchen des metallischen Körpers in ein Bad mit Beschichtungsmittel, wobei das Bad Polytetrafluorethylen (PTFE) enthält.

In Schritt a) kann beispielsweise eine CNC-Bearbeitung durchgeführt werden, beispielsweise durch Fräsen oder Bohren. Alternativ kann auch Aluminiumguss verwendet werden.

Im folgenden Schritt b) wird die innere Oberfläche anodisiert, wodurch eine Aluminiumoxidschicht auf der Oberfläche ausgebildet wird. Dies dient zur Verstärkung der Oberfläche. Anschließend wird zumindest die innere Oberfläche in Schirtt c) Bearbeitet, genauer gesagt oberflächenbearbeitet. Daraufhin wird in Schritt d) der metallische Körper in ein Bad mit Beschichtungsmittel eingetaucht, wobei das Bad Polytetrafluorethylen (PTFE) enthält. Dadurch wird zumindest die innere Oberfläche des Zylinders vollständig mit PTFE abgedeckt.

Dadurch kann erreicht werden, dass eine Beschichtung insbesondere an der inneren Oberfläche homogen und durchgehend aufgebracht wird, es kann somit erreicht werden, dass keine Stellen vorliegen, an welchen Metall freiliegt. Auch stellt sich dadurch der bereits oben genannte Effekt ein, dass PTFE, welches vom Metall abgekratzt wird, einen Gleitfilm in den Rillen, das heißt zwischen einzelnen Erhebungen und Vertiefungen (durch die Oberflächenrauigkeit) ausbilden kann. Damit werden die Gleiteigenschaften deutlich erhöht.

Dies ist ein einfaches und kostengünstiges Herstellungsverfahren.

Vorzugweise wird in Schritt c) die Bearbeitung der inneren Oberfläche durch Honen, Schleifen oder Feindrehen vorgenommen.

Im Folgenden werden vorteilhafte Ausführungsformen der vorliegenden Erfindung unter Bezugnahme auf die beiliegenden Zeichnungen näher erläutert.
- Fig. 1: ist eine schematische Skizze des erfindungsgemäßen Zylinders.
- Fig. 2: ist eine Oberflächenansicht der inneren Oberfläche des Zylinders, welche mit einer Beschichtung aus PTFE beschichtet ist.
- Fig. 3: zeigt eine schematische Ansicht eines erfindungsgemäßen Zylinders mit Kolben und Kolbenring.

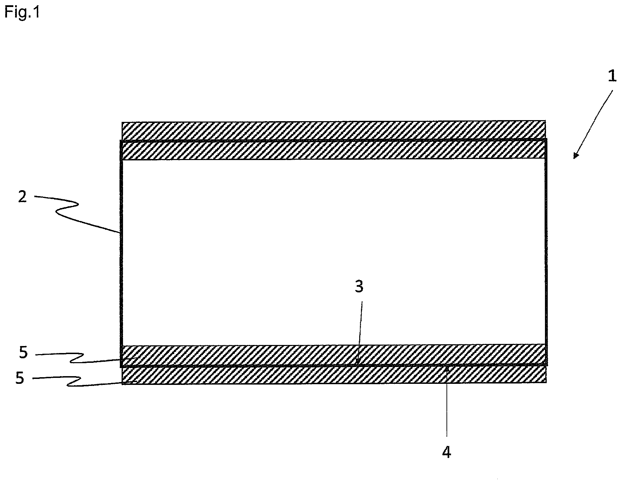

Fig. 1 zeigt eine schematische Querschnittsansicht eines Zylinders 1. Der metallische Körper 2 ist hier zylinderförmig dargestellt (in Schnittansicht), dieser weist eine innere Oberfläche 3 und eine äußere Oberfläche 4 auf. Sowohl auf der inneren Oberfläche 3 als auch der äußeren Oberfläche 4 ist jeweils eine Beschichtung 5, welche PFFE enthält, aufgetragen. Die bedeckt zumindest die innere Oberfläche 3 komplett.

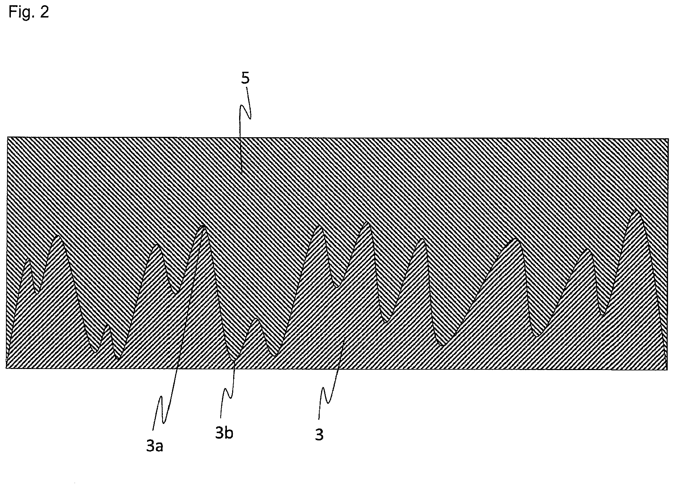

Fig. 2 zeigt eine genauere Ansicht einer inneren Oberfläche 3 und einer Beschichtung 5. Die innere Oberfläche 3 weist hier einige Erhebungen 3a und Vertiefungen 3b auf, diese sind komplett von der Beschichtung 5 abgedeckt.

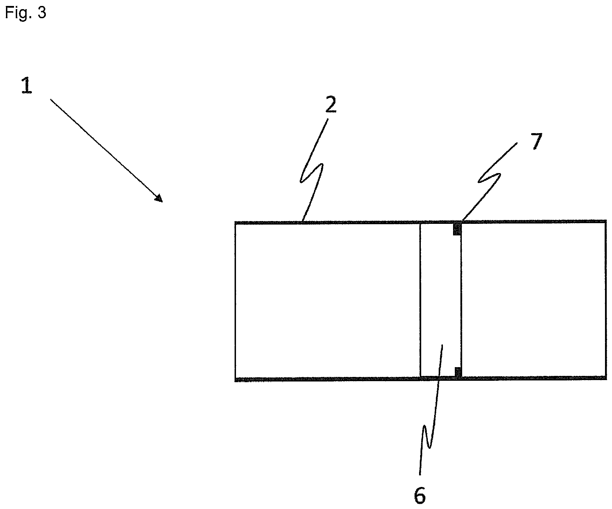

Fig. 3 zeigt eine Anordnung eines Zylinders 1, hier ist im metallischen Körper 2 ein Kolben 6 gelagert und kann in diesem gleiten, um den Umfang des Kolbens 6 ist ein Kolbenring 7 angebracht.

Die vorliegende Erfindung ist nicht auf die oben beschriebenen Ausführungsformen beschränkt. Es sind auch andere Beschichtungen möglich, sofern sie PTFE enthalten. Ferner kann ein Zylinder auch noch Bohrungen und sonstige weitere Merkmale aufweisen, es muss nicht unbedingt ein einstufiger glatter Zylinder sein.

### BEZUGSZEICHENLISTE

- 1: Zylinder
- 2: metallischer Körper
- 3: innere Oberfläche
- 3a: Erhebung
- 3b: Vertiefung
- 4: äußere Oberfläche
- 5: Beschichtung
- 6: Kolben
- 7: Kolbenring

## Patentansprüche

1. Kompressor, aufweisend:
mindestens einen Zylinder (1), der aufweist:
einen zumindest teilweise hohlen metallischen Körper (2) mit einer inneren Oberfläche (3) sowie einer äußeren Oberfläche (4),
wobei auf die innere Oberfläche (3) eine antikorrosive Beschichtung (5) aufgebracht ist, welche Polytetrafluorethylen (PTFE) enthält.

2. Kompressor nach Anspruch 1, **dadurch gekennzeichnet, dass** auf die innere Oberfläche (3) sowie die äußere Oberfläche (4) die antikorrosive Beschichtung (5) aufgebracht ist.

3. Kompressor gemäß Anspruch 1 oder 2, wobei der metallische Körper des Zylinders (1) Aluminium oder eine Aluminiumlegierung enthält, und/oder die Beschichtung (5) einen PTFE-Kohlenstoff-Verbundwerkstoff enthält, welcher vorzugsweise kohlenstoffhaltige Partikel enthält.

4. Kompressor gemäß einem der vorangehenden Ansprüche, weiterhin aufweisend:
einen Kolben (6), welcher dazu angepasst ist, sich innerhalb des metallischen Körpers (2) zu bewegen,
einen Kolbenring (7), welcher radial am Kolben (6) montiert ist.

5. Kompressor gemäß Anspruch 4, wobei
der Kolben (6) aus einem metallischen Werkstoff, vorzugsweise Aluminium, besteht, auf welchen eine Beschichtung (8), welche Polytetrafluorethylen (PTFE) enthält, aufweist,
und der Kolbenring (7) aus einem Werkstoff gefertigt ist, der Polytetrafluorethylen (PTFE) aufweist.

6. Kompressor gemäß einem der Ansprüche 1 bis 5, welcher als ölfreier Kompressor ausgeführt ist.

7. Verfahren zur Herstellung eines zumindest teilweise hohlen Zylinders (1) aus einem metallischen Körper (2), mit einer inneren (3) und einer äußeren (4) Oberfläche, aufweisend die folgenden Schritte:
a) Herstellen des metallischen Körpers (2) durch ein urformendes oder spanabhebendes Verfahren;
b) Anodisieren zumindest der inneren Oberfläche (3);
c) Bearbeiten zumindest der inneren Oberfläche (3);
d) Eintauchen des metallischen Körpers (2) in ein Bad mit
Beschichtungsmittel, wobei das Bad Polytetrafluorethylen (PTFE) enthält.

8. Verfahren gemäß Anspruch 7, wobei in Schritt c) die Bearbeitung zumindest der inneren Oberfläche durch Honen, Schleifen oder Feindrehen erfolgt
